# EUROPÄISCHE PATENTSCHRIFT

(11) **EP 1 005 215 B1**
(45) Veröffentlichungstag und Bekanntmachung des Hinweises auf die Patenterteilung: **16.01.2008**
(21) Anmeldenummer: 99440317.8
(22) Anmeldetag: 16.11.1999
(51) Int. Cl.: H04M 3/42, H04Q 3/00, H04M 3/22

(54) **Verfahren und Vorrichtung zum Editieren von Konfigurationsdaten für Telekommunikationssysteme**
Method and system for editing configuration data in telecommunications systems
Procédé et système pour l'édition des données de configuration pour systèmes de télécommunication

(30) Priorität: 27.11.1998 DE 19854754
(43) Veröffentlichungstag der Anmeldung: 31.05.2000
(73) Patentinhaber: Alcatel Lucent, 75008 Paris (FR)
(72) Erfinder: Hemzahl, Georg, 12439 Berlin (DE); Foth, Michael, 10825 Berlin (DE)
(74) Vertreter: Brose, Gerhard

(56) Entgegenhaltungen:
- WO-A-97/16929
- WO-A-98/28897
- US-A- 5 214 692
- US-A- 5 713 075

## Beschreibung

Die vorliegende Erfindung betrifft ein Verfahren zum Editieren von Konfigurationsdaten für Telekommunikationssysteme und zum Ermitteln von Editierungsregeln, sowie einen Editor hierfür, einen Rechner hierfür, ein system und ein Speichermittel hierfür.

Telekommunikationssysteme, z.B. Vermittlungsstellen, Zugangssysteme, Cross-Connects, Netzwerk Management Systeme, Rechnernetzwerke etc., werden im allgemeinen durch in gewissen Grenzen wählbare Konfigurationsdaten an spezielle Erfordernisse angepaßt, die durch den jeweiligen Einsatzbereich bestimmt werden. Gemäß der Vorgaben solcher Konfigurationsdaten kann eine in einem Telekommunikationssystem enthaltene Steuerungssoftware das Telekommunikationssystem in dem jeweiligen Einsatzbereich bestimmungsgemäß steuern. Einer modernen digitalen Vermittlungsstelle muß z.B. durch entsprechende Konfigurationsdaten unter anderem vorgegeben werden, welche Teilnehmeranschlüsse die Vermittlungsstelle zu bedienen hat, welche Rufnummern diesen jeweils zugeordnet sind und welche Telekommunikationsdienste den jeweiligen Teilnehmeranschlüssen zur Verfügung gestellt werden. Die Konfigurationsdaten eines solchen Teilnehmeranschlusses müssen dabei vorgegebenen Regeln genügen. So darf z.B. eine Rufnummer eines Teilnehmeranschlusses nur Zahlzeichen und keine Buchstabenzeichen enthalten und muß aus einer vorgegebenen Anzahl von Zahlzeichen bestehen. Ferner ist es meist nur dann möglich, einen Telekommunikationsdienst einem Teilnehmeranschluß zuzuweisen, wenn dessen Rufnummer zu einer für den jeweiligen Telekommunikationsdienst vorgesehenen Rufnummerngruppe gehört. Beispielsweise können für ein ISDN-Telekommunikationsnetz (Integrated Services Digital Network) definierte Dienste in vollem Umfang nur für einen ISDN-fähigen Teilnehmeranschluß eingerichtet werden. Damit auch umfangreiche und komplizierten Bedingungen unterworfene Konfigurationsdaten komfortabel editiert, also für eine Modifikation angezeigt werden können, wird vorteilhaft ein für die jeweiligen Konfigurationsdaten geeigneter, spezieller, auf einem Rechner ablauffähiger Editor eingesetzt, zumeist unter einer graphischen Bedienoberfläche eines Betriebsystemes, z.B. Microsoft-Windows oder X-Windows. Ein solcher Editor zeigt einerseits bereits erstellte Konfigurationsdaten übersichtlich und komfortabel an, die meist in Form zahlreicher, untereinander in Beziehungen stehender Tabellen vorliegen. Andrerseits ermöglicht der Editor auch Eingaben zu den Konfigurationsdaten und zwar sowohl neue Eingaben als auch Ergänzungen oder Änderungen von bestehenden Eingaben. Vorteilhafterweise überprüft der Editor die Eingaben. Wenn z.B. ein Datenfeld für eine Rufnummer vorgesehen ist, läßt der Editor eine Eingabe in das Datenfeld nur dann zu, wenn diese Eingabe ausschließlich Zahlzeichen enthält. Die Gestaltung der Anzeige von Konfigurationsdaten ist üblicherweise in einem solchen Editor fest programmiert. Der Editor ist zumeist Teil eines Konfigurationssystemes. Ein solches Konfigurationssystem enthält neben dem Editor unter anderem auch ein sogenanntes Validierungs-Programmodul, mit dem die Konfigurationsdaten nach dem Editieren noch auf ihre Gültigkeit und Konsistenz überprüft werden.

In der Patentanmeldung WO-A-9716929 ist ein System offenbart, bei dem drei sogenannte "software toolsets", die auf unterschiedlichen Architekturleveln arbeiten, verwendet werden, um Dienste zu erstellen. Dabei werden auf den unterschiedlichen Architekturleveln durch unterschiedliche Editoren Strukturierungen vorgenommen, wobei Strukturierungen die auf einem unteren Architekturlevel vorgenommen wurden, Randbedingungen für vorzunehmende Strukturierungen auf einem höheren Architekturlevel darstellen. Von einem System solcher Art geht die Erfindung aus.

Ferner ist in der Europäischen Patentanmeldung EP-A-0793171 offenbart, dass ein Prozess zur Softwarekonfiguration in Unterprozesse aufgeteilt wird, wobei in einem dieser Unterprozesse die Bestimmung der Konfiguration vorgenommen wird und in einem anderen die Aktualisierung der Konfiguration durchgeführt wird, dass die Softwarekonfiguration bestimmte Regeln befolgen muss, und dass bestimmte Daten, die der Bestimmung und Bearbeitung der Softwarekonfiguration dienen, über eine grafische Schnittstelle vom Anwender eingegeben werden.

In der Patentanmeldung WO-A-9805152 ist ein System offenbart, bei dem mittels eines Installations- und Managementsystems eine Vielzahl von verschiedenen Telekommunikationsausrüstungen verwaltet und kontrolliert werden. Um diesen Zweck zu erfüllen, ist beschrieben, dass der Quellcode dieses Installations- und Managementsystems ein Programm zur Darstellung von generischen oder spezifischen Oberflächen für die Dateneingabe enthält. Außerdem wird eine standardisierte Benutzeroberfläche zum Eingeben und Ändern von Informationen verwendet.

Ein typisches Beispiel für ein Konfigurationssystem ist in der Europäischen Patentanmeldung EP 0 678 817 A1 dargestellt. Dort werden von einem Computer mit Hilfe einer graphischen Bedienoberfläche Konfigurationsdaten erfaßt und nach der Eingabe mit Hilfe eines Programmodules einer Überprüfung ihrer Konsistenz, also einer Validierung unterzogen. Erst dann werden die Konfigurationsdaten in eine Datenbank geschrieben und anschließend in einen Zustand weiterverarbeitet, in dem sie in ein "Zielsystem" genanntes Telekommunikationssystem geladen werden können. Sowohl die graphische Bedienoberfläche als auch das Programmodul zum Editieren der Konfigurationsdaten und die in dem Validierungs-Programmodul enthaltenen Validierungsregeln sind - wie allgemein üblich - speziell für die zu erfassenden Konfigurationsdaten vorgesehen und programmiert, im vorliegenden Beispiel in der Programmiersprache "Omnis 7". Ein solcherart "fest" programmierter Editor sowie ein ebenfalls "fest" programmiertes zugehöriges Validierungs-Programmodules sind nur jeweils für die Erstellung von Konfigurationsdaten für ein bestimmtes Ziel-Telekommunikationssystem geeignet, so daß für jedes Ziel-Telekommunikationssystem oder jeden Typ eines solchen Systemes jeweils ein speziell für das jeweilige Ziel-Telekommunikationssystem geeignetes Konfigurationssystem erstellt werden muß.

Sofern sich die Bedingungen ändern, denen Konfigurationsdaten genügen müssen, z.B. weil eine neue Steuersoftware eines Telekommunikationssystemes Konfigurationsdaten in anderer Form oder in anderem Umfang verlangt oder weil in Konfigurationsdaten zusätzlich neue Datentypen zur Konfiguration neuer Leistungsmerkmale enthalten sind, muß auch ein für die neuen Konfigurationsdaten geeigneter neuer Editor erstellt werden oder ein bestehender Editor zumindest teilweise neu programmiert und anschließend compiliert werden. Einen neuen Editor zu erstellen ist jedoch einerseits zeitraubend und nur mit Hilfe von Programmierwerkzeugen möglich. Andrerseits unterlaufen bei einer solchen Neuprogrammierung leicht Fehler, die durch umfangreiches Testen des neuen oder des modifizierten Editors ermittelt und anschließend behoben werden müssen.

Aufgabe der Erfindung ist es, Konfigurationsdaten für ein Telekommunikationssystem auf effiziente Weise nach für das jeweils mit den Konfigurationsdaten zu konfigurierende Telekommunikationssystem geeigneten Editierungsregeln zu editieren und besagte Editierungsregeln zu ermitteln.

Diese Aufgabe wird durch ein Verfahren zum Editieren von Konfigurationsdaten für Telekommunikationssysteme gemäß der technischen Lehre des Anspruchs 1, sowie einen Editor gemäß der technischen Lehre des Anspruchs 5, einen Rechner gemäß der technischen Lehre des Anspruchs 6, ein System gemäß der technischen Lehre des Anspruchs 7 und ein Speichermittel gemäß der technischen Lehre des Anspruchs 8 gelöst. Weitere vorteilhafte Ausgestaltungen der Erfindung sind den abhängigen Ansprüchen und der Beschreibung zu entnehmen.

Der Erfindung liegt hierbei der Gedanke zugrunde, einen Editor, ein auf einem Computer ausführbares Programmodul, so zu gestalten, daß der Editor Editierungsregeln, die in verschiedenen Editierungsregelsätzen abgelegt sind und jeweils für das Editieren von Konfigurationsdaten eines Telekommunikationssystem erforderlich sind, vor dem eigentlichen Editieren der Konfigurationsdaten ermittelt. Einen so ermittelten Editierungsregelsatz liest der Editor dann aus einem Speicher aus und editiert die Konfigurationsdaten nach den in dem Editierungsregelsatz enthaltenen Editierungsregeln. Die Editierungsregeln sind erfindungsgemäß also nicht in dem eigentlichen Editor enthalten, sondern werden abhängig von den zu prüfenden Konfigurationsdaten jeweils erneut eingelesen und durch den Editor ausgewertet. Die Editierungsregeln umfassen dabei beispielsweise Regeln zur Anzeige der Konfigurationsdaten, sogenannte Formatierungsregeln, Regeln die Beziehungen zwischen Bestandteilen der Konfigurationsdaten definieren und Regeln zur Prüfung von Bedienereingaben. In einer Ausgestaltung der Erfindung ermittelt der Editor Regeln zur Prüfung von Bedienereingaben aus einem Validierungsregelsatz, der einem Validierungsmodul Regeln für die Validierung der Konfigurationsdaten vorgibt. Welcher Editierungsregelsatz jeweils von dem Editor zu verwenden ist, kann in Steuerdaten definiert sein, die der Editor einliest und auswertet. Den jeweils zu verwendenden Editierungsregelsatz kann der Editor auch anhand eines Kennzeichners ermitteln, der in den zu editierenden Konfigurationsdaten enthalten ist.

Im folgenden werden die Erfindung und ihre Vorteile anhand eines Ausführungsbeispiels unter Zuhilfenahme der Zeichnungen dargestellt.
- Figur 1: zeigt ein sehr schematisches Beispiel einer Anordnung zur Ausführung des erfindungsgemäßen Verfahrens mit einem erfindungsgemäßen Editor (EM), Editierungsregelsätzen (ER1, ER2), zu editierenden Konfigurationsdaten (KD) und einer Meldung (MSG) sowie einem Validierungsmodul (VM) und einem Validierungsregelsatz (VR).
- Figur 2: zeigt ein Ablaufdiagramm eines erfindungsgemäßen Editors (EM).
- Figur 3: zeigt einen erfindungsgemäßen Rechner (SER) zur Ausführung des erfindungsgemäßen Verfahrens.

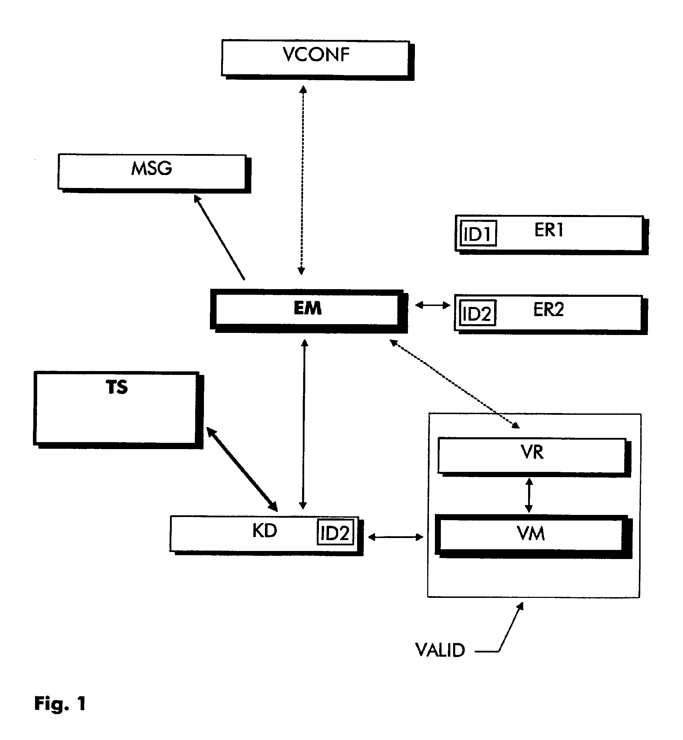

Figur 1 zeigt ein sehr schematisches Beispiel einer Anordnung zur Ausführung des erfindungsgemäßen Verfahrens. Dort ist ein erfindungsgemäßer Editor EM dargestellt, der als ein Programmodul auf einem Computer ausführbar ist und Konfigurationsdaten universell für verschiedenartige Telekommunikationssysteme editieren kann. Solche Konfigurationsdaten sind in Figur 1 schematisch als Konfigurationsdaten KD gezeigt.

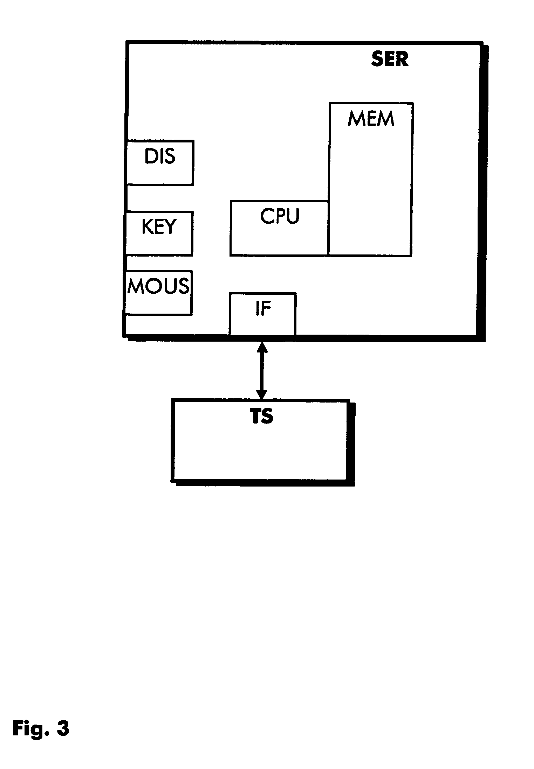

Ein Computer, z.B. ein Personal Computer oder eine Workstation, zur Ausführung des Editors EM ist in einigen wesentlichen Komponenten in Figur 3 als Rechner SER dargestellt. Der Rechner SER enthält ein Steuermittel CPU, z.B. einen Prozessor, zur Ausführung maschinenlesbarer Befehle, z.B. zur Ausführung des Editors EM. Ferner weist der Rechner SER einen Speicher MEM auf, in dem der Editor EM gespeichert sein kann. Außerdem verfügt der Rechner SER als Eingabemittel über ein Tastenfeld KEY und eine sogenannte Maus MOUS, um Daten z.B. in den Editor EM einzugeben. Der Rechner SER kann an einer Anzeigevorrichtung DIS, z.B. einem Bildschirm, Daten anzeigen, die z.B. von dem Editor EM erzeugt werden. Über eine Anschlußvorrichtung IF können Daten mit einem "Zielsystem TS" genannten Telekommunikationssystem ausgetauscht werden. Die Komponenten des Rechners SER sind durch in Figur 3 nicht dargestellte Verbindungen miteinander verbunden. Ein Betriebssystem, z.B. UNIX oder DOS (Disc Operating System), verwaltet die Betriebsmittel des Rechners SER und steuert unter anderem die Ausführung des Editors EM. Zur weiteren Darstellung der Erfindung wird wieder die Figur 1 betrachtet, wobei auch auf Komponenten des in Figur 3 dargestellten Rechners SER verwiesen wird.

Der Editor EM kann die Konfigurationsdaten KD nach einer oder mehreren Editierungsregeln editieren, die in einem Editierungsregelsatz enthalten sind. Beispiele für solche Editierungsregelsätze sind in Form eines Editierungsregelsatzes ER1 und eines Editierungsregelsatzes ER2 in Figur 1 gezeigt. Die Editierungsregelsätze ER1 und ER2 stehen beispielhaft für weitere, in Figur 1 nicht dargestellte Editierungsregelsätze und sind in dem Speicher MEM abgelegt. Die Konfigurationsdaten KD sind für die Konfiguration des aus Figur 1 bekannten Zielsystemes TS geeignet, das z.B. eine Vermittlungsstelle oder ein Netzwerk-Management-System sein kann. Die Konfigurationsdaten KD enthalten z.B. Daten über Verbindungen, die von dem Zielsystem TS geschaltet werden können oder Daten, die von dem Zielsystem TS bediente Teilnehmeranschlüsse definieren. Das Zielsystem TS kann jedoch auch z.B. eine Fernwirk-Unterstation sein. Die Konfigurationsdaten KD enthalten dann z.B. Daten über Messwerte und Befehle, die die Fernwirk-Unterstation erfassen bzw. ausgeben soll. Die Konfigurationsdaten KD können mit Hilfe des Editors EM sowohl neu erstellt werden als auch lediglich modifiziert werden. Vorgabewerte, sogenannte Default-Werte, für ein erstmaliges Erzeugen der Konfigurationsdaten KD kann der Editor EM einem der Editierungsregelsätze ER1 oder ER2 entnehmen. Wenn die Konfigurationsdaten KD von dem Editor EM nur modifiziert werden sollen, kann dem Editor EM z.B. über das Tastenfeld KEY eine Anweisung gegeben werden, solche bereits definierten Konfigurationsdaten KD von dem Speicher MEM zu laden oder auch von dem Zielsystem TS zu empfangen. Dazu sendet das Zielsystem TS z.B. über eine Verbindungsleitung und über die Schnittstellenvorrichtung IF des Rechners SER die Konfigurationsdaten KD an den Editor EM. Der Vorgang des Ausgebens der Konfigurationsdaten KD durch den Editor EM sowie auch des Ladens von bereits definierten Konfigurationsdaten KD in den Editor EM wird durch einen bidirektionalen Pfeil angedeutet.

Zum Editieren der Konfigurationsdaten KD ermittelt der Editor EM, nach welchen Editierungsregeln die Konfigurationsdaten KD zu prüfen sind. Dazu verwendet der Editor EM z.B. Steuerdaten VCONF, in denen angegeben ist, in welchem Editierungsregelsatz die erforderlichen Editierungsregeln enthalten sind. Die Steuerdaten VCONF können z.B. als sogenannte Aufrufparameter dem Editor EM bei dessen Start mitgegeben werden oder in Form einer Steuertabelle in dem Speicher MEM abgelegt sein, in der jeweils eine Zuordnung von Konfigurationsdaten zu einem Editierungsregelsatz definiert ist. Dort kann z.B. festgelegt sein, daß ein bestimmter Typ eines Zielsystemes Konfigurationsdaten benötigt, die anhand des Editierungsregelsatzes ER1 zu editieren sind, ein anderer Typ eines Zielsystemes jedoch Konfigurationsdaten, die nach dem Editierungsregelsatz ER2 editiert werden müssen. In einer später noch erläuterten Variante ermittelt der Editor EM ohne Zuhilfenahme der Steuerdaten VCONF, welcher der Editierungsregelsätze ER1 oder ER2 zu verwenden ist. In dem Beispiel aus Figur 1 ist in den Steuerdaten VCONF festgelegt, daß die Konfigurationsdaten KD nach den Vorgaben des Editierungsregelsatzes ER2 zu editieren sind. Der Editor EM liest den Editierungsregelsatz ER2 aus dem Speicher MEM ein und editiert die Konfigurationsdaten KD nach den Vorgaben des Editierungsregelsatzes ER2. Nach dem Editieren gibt der Editor EM die Konfigurationsdaten KD wieder aus, insbesondere dann, wenn bei dem Editieren Änderungen vorgegeben worden sind, z.B. indem der Editor EM die Konfigurationsdaten KD in dem Speicher MEM abspeichert oder über die Schnittstellenvorrichtung IF an das Zielsystem TS sendet. Wenn keine Änderungen an den Konfigurationsdaten KD vorgenommen worden sind, kann im Einzelfall auch auf den Schritt des Augebens geänderter Konfigurationsdaten KD verzichtet werden.

Der Vorgang eines Editierens von Daten an einem Computer, insbesondere auch mit einer graphischen Bedienoberfläche ist an sich bekannt. Das Editieren umfaßt dabei im wesentlichen das Anzeigen sowie das Erfassen von Daten. Diese Funktionen sowie weitergehende, später noch im einzelnen erläuterte Funktionen leistet der Editor EM in dem in Figur 1 dargestellten Beispiel nach Editierungsregeln des Editierungsregelsatzes ER2. Nach diesen Editierungsregeln kann der Editor EM eine für die Konfigurationsdaten KD geeignete Anzeigeform der Konfigurationsdaten KD an der Anzeigevorrichtung DIS steuern. So kann z.B. mit dem Editierungsregelsatz ER2 definiert werden, daß die Konfigurationsdaten KD in Tabellenform anzuzeigen sind. Auch die Gestaltung einzelner Tabellen, z.B. wieviele Zeilen und Spalten eine Tabelle umfaßt und welche Angaben in den Zeilen- und Spaltenköpfen der Tabelle stehen sollen, werden durch den Editierungsregelsatz ER2 definiert. Ferner kann in dem Editierungsregelsatz ER2 in sogenannten Formatierungsregeln angegeben sein, wie die einzelnen Zellen einer Tabelle zu formatieren sind, z.B. ob deren Inhalt linksbündig oder zentriert, in Fettschrift oder Kursivschrift anzuzeigen ist.

Wenn die Konfigurationsdaten KD jedoch - wie bei einem komplizierten Ziel-Telekommunikationssystem üblich - sehr umfangreich sind und deren Bestandteile in komplexen wechselseitigen Beziehungen stehen, kann der Editor EM die Konfigurationsdaten KD auch in Teilansichten, z.B. in Form unterschiedlicher Tabellen darstellen. Die jeweils optimale Teilansicht der Konfigurationsdaten KD kann der Editor EM anhand von in dem Editierungsregelsatz ER2 angegeben Editierungsregeln ermitteln. Wenn z.B. ein Eintrag in den Konfigurationsdaten KD in je einem Feld in zwei Tabellen schon erfolgt ist oder noch zu erfolgen hat, also wechselseitig referenziert ist, zeigt der Editor EM beide Tabellen beispielsweise nebeneinander an, wenn ein Bediener eines der Felder z.B. mit der Maus MOUS anwählt, oder schaltet zwischen Teilansichten mit je einer der Tabellen um, wenn der Bediener eine Anweisung dazu gibt, z.B. per sogenanntem "Doppelklick" mit der Maus MOUS auf eines der Felder.

Über das reine Erfassen und Ausgeben von Daten hinaus überprüft der Editor EM auch Bedienereingaben in die Konfigurationsdaten KD. In dem Editierungsregelsatz ER2 sind dazu Anweisungen enthalten, in denen festgelegt ist, welche Bedienereingaben erlaubt sind und welche von dem Editor EM zurückzuweisen sind. Wenn ein Feld einer Tabelle z.B. für den Eintrag einer Rufnummer vorgesehen ist und eine solche Rufnummer jeweils sechsstellig sein soll, weist der Editor jede Eingabe zurück, die diese Bedingungen nicht erfüllt. Gibt der Bediener dem Editor EM eine Eingabe vor, die die vorgesehenen Bedingungen nicht erfüllt, meldet dies der Editor EM mit einer Meldenachricht MSG, z.B. in Form einer Ausgabe an der Anzeigevorrichtung DIS. Mit Hilfe der Meldenachricht MSG kann der Editor EM den aufgetretenen Fehler detailliert anzeigen und auch einen Hilfetext an den Bediener ausgeben, in dem die Erfordernisse für eine korrekte Eingabe beschrieben werden.

Zur Vermeidung fehlerhafter Bedienereingaben und zu deren Vereinfachung kann der Editor EM dem Bediener eine Liste möglicher und erlaubter Eingabewerte für ein Eingabefeld anzeigen, z.B. in Form von sogenannten Auswahlfeldern, engl. "Pick Lists". Die Vorgabewerte für solche Listen sowie auch die Art und Gestaltung von deren Anzeige kann der Editor EM aus Editierungsregeln des Editierungsregelsatzes ER2 ermitteln.

Wenn sich die Erfordernisse geändert haben, welche die Konfigurationsdaten KD für einen korrekten Betrieb des Zielsystemes TS erfüllen müssen, genügt es, lediglich den Editierungsregelsatz ER2 auszutauschen oder so zu modifizieren, daß die in dem neuen oder modifizierten Editierungsregelsatz ER2 enthaltenen Editierungsregeln ein an die neuen Erfordernisse des Zielsystemes TS angepaßtes Editieren ermöglichen. Der Editor EM an sich muß nicht geändert werden. Auf diese Weise ist es auch leicht möglich, weitere Editierungsregeln in einen Editierungsregelsatz einzufügen oder nicht mehr benötigte Editierungsregeln aus einem Editierungsregelsatz zu entfernen. Soll der Editor EM Konfigurationsdaten editieren, die weder mit dem Editierungsregelsatz ER1 noch mit dem Editierungsregelsatz ER2 editierbar sind, kann auch jederzeit ein neuer Editierungsregelsatz zu den Editierungsregelsätzen ER1 und ER2 hinzugefügt werden, mit dem die neuen Konfigurationsdaten editiert werden können.

Zwar wäre es prinzipiell auch denkbar, daß die Konfigurationsdaten bereits Editierungsregeln zumindest in einem gewissen Umfang enthalten, z.B. Formatierungsregeln. Vor dem Laden in ein Zielsystem müssen diese Editierungsregeln jedoch umständlich aus den Konfigurationsdaten entfernt werden, da die Steuersoftware des Zielsystemes zwar die Konfigurationsdaten an sich auswerten kann, nicht jedoch die Editierungsregeln. Ein weiteres Problem ergibt sich bei einer solchen Vorgehensweise, wenn zuvor von Editierungsregeln befreite Konfigurationsdaten zur Überarbeitung wieder von dem Zielsystem in einen Editor geladen werden. Dies ist in der Praxis sehr häufig der Fall. Dann müssen vor dem Laden der Konfigurationsdaten in den Editor wieder Editierungsregeln zu den Konfigurationsdaten hinzugefügt werden. Durch das erfindungsgemäße Trennen von Konfigurationsdaten und Editierungsregeln und das dynamische Laden eines jeweils geeigneten Editierungsregelsatzes werden diese Probleme auf einfache Weise vermieden.

Wie oben bereits erwähnt, kann der Editor EM mit Hilfe des Editierungsregelsatzes ER2 Bedienereingaben überprüfen. Es ist jedoch auch möglich, daß der Editor EM die Regeln für eine Überprüfung von Bedienereingaben aus einem Regelsatz ermittelt, der eigentlich zu einer Validierung der Konfigurationsdaten KD dient. Ein solcher Regelsatz ist in Form eines Validierungsregelsatzes VR in Figur 1 dargestellt. Der Validierungsregelsatz VR steht beispielhaft für weitere in Figur 1 nicht dargestellte Validierungsregelsätze und wird von einem Validierungsmodul VM, einem ebenfalls auf dem Rechner SER ausführbaren Programmodul, jeweils für eine Validierung ermittelt und eingelesen. Dann wertet das Validierungsmodul VM die darin enthaltenen Validierungsregeln im Rahmen einer Validierung der Konfigurationsdaten KD aus. Die Zuordung des Validierungsregelsatzes VR zu dem Validierungsmodul VM ist durch einen Pfeil angedeutet. Das Validierungsmodul VM und der Validierungsregelsatz VR bilden gemeinsam ein Validierungssystem VALID, das sowohl von dem Editor EM als auch von einem anderen, in Figur 1 nicht dargestellten Datenerfassungssystem erfaßte Konfigurationsdaten überprüfen kann. Wenn die von dem Validierungsmodul VM überprüften Konfigurationsdaten, in Figur 1 die Konfigurationsdaten KD, der Überprüfung standgehalten haben, also konsistent sind, können die Konfigurationsdaten KD in das Zielsystem TS geladen und von diesem als Betriebsparameter übernommen werden.

Der Editor EM kann z.B. mit Hilfe der Steuerdaten VCONF, anhand eines entsprechenden Hinweises in dem Editierungsregelsatz ER2 oder auch anhand der Struktur und Gestaltung der Konfigurationsdaten KD ermitteln, daß er den Validierungsregelsatz VR zum Editieren der Konfigurationsdaten KD hinzuziehen muß. Der Editor EM liest dann den Validierungsregelsatz VR ein und wertet die darin enthaltenen Validierungsregeln zumindest teilweise aus. In der Regel wird der Editor EM nicht alle in einem solchen Validierungsregelsatz enthaltenen Validierungsregeln auswerten, da ein Validierungsregelsatz im allgemeinen für eine umfangreiche, zahlreiche wechselseitige Beziehungen zwischen Datenfeldern berücksichtigende Validierung von Konfigurationsdaten vorgesehen ist. Für eine Validierung von einzelnen Datenfeldern definierte Validierungsregeln, sogenannte "A-Regeln" sowie auch Bedingungen zwischen Datenfeldern definierende sogenannte "B-Regeln" eigenen sich jedoch in besonderer Weise für eine Auswertung durch den Editor EM. Anhand solcher Validierungsregeln kann der Editor EM Bedienereingaben prüfen und nur diesen Validierungsregeln entsprechende Bedienereingaben zulassen. Es ist jedoch möglich, daß der Editor EM auch detailliertere und weitergehende Prüfungen von Bedienereingaben anhand entsprechender Validierungsregeln des Validierungsregelsatzes VR vornimmt. In solchen weitergehenden Prüfungen werden z.B. sogenannte "C-Regeln" ausgewertet, die Bedingungen zwischen Datenfeldern unterschiedlicher Datensätze einer Tabelle definieren, sowie "D-Regeln", die auch Beziehungen zwischen Datenfeldern unterschiedlicher Tabellen festlegen. Die Validierungsregeln können in einer weiteren Variante der Erfindung statt in dem separaten Validierungsregelsatz VR auch in dem Editierungsregelsatz ER2 - vollständig oder auch nur teilweise - enthalten sein, so daß der Editor EM bereits durch den Editierungsregelsatz ER2 alle notwendigen Validierungsregeln verfügbar hat.

Durch das in dem obigen Abschnitt dargestellte Einlesen und Auswerten von Validierungsregeln, die für eine Validierung der Konfigurationsdaten KD durch das Validierungsmodul VM definiert sind, müssen die Validierungsregeln, welche die Konfigurationsdaten KD erfüllen müssen, nur einmal und in einer für den Editor EM wie auch für das Validierungsmodul VM auswertbaren Sprache erzeugt werden und nicht jeweils separat für den Editor EM und das Validierungsmodul VM. So wird einerseits Arbeitsaufwand eingespart und andrerseits eine fehlerträchtige doppelte Definition von Validierungsregeln sowie diesen in ihrer Funktion gleichenden Editierungsregeln vermieden, die jeweils eine ähnliche Aufgabe erfüllen. Außerdem kann der Editor EM bereits bei der Eingabe von neuen oder geänderten Konfigurationsdaten KD prüfen, ob die neuen Eingaben einer späteren Validierung durch das Validierungsmodul VM standhalten können.

Wenn in den Editierungsregelsätzen ER1 oder ER2 Vorgabeinformationen, z.B. Textelemente, für einen Inhalt der Meldenachricht MSG enthalten, kann der Editor EM diese Vorgabeinformationen zur Gestaltung der Meldenachricht MSG verwenden. So kann z.B. in den Editierungsregelsätzen ER1 oder ER2 für jede der dort enthaltenen Editierungsregeln zur Prüfung von Bedienereingaben festgelegt sein, welche Fehlermeldung von dem Editor EM anzuzeigen ist, wenn bei einer Prüfung nach den Vorgaben der jeweiligen Editierungsregel ein Fehler auftritt. Weil die Vorgabeinformationen für die Meldenachricht MSG nicht Bestandteil des Editors EM sind, sondern jeweils aus einem Editierungsregelsatz ausgelesen werden, können diese Vorgabeinformationen genauso wie die Editierungsregeln leicht ausgetauscht oder modifiziert werden, um so aktuellen Erfordernissen gerecht zu werden. Damit kann z.B. durch einen neu in einen Editierungsregelsatz eingefügten Text für eine Fehlermeldung eine Ursache für einen Fehler näher präzisiert werden.

Die in den Editierungsregelsätzen ER1 und ER2 enthaltenen Editierungsregeln müssen durch die Gestaltung des Editors EM vorgegebenen syntaktischen und semantischen Regeln entsprechen, müssen also in einer festgelegten Sprache verfaßt sein. Eine solche Sprache kann für den Editor EM eigens definiert werden. Eine Anweisung zum Anzeigen eines Datenfeldes der Konfigurationsdaten KD, zu einer sogenannten Formatierung des Datenfeldes, kann z.B. lauten: "Feld: Linksbündig". Ein Eintrag in dieses Datenfeldes wird von dem Editor EM dann linksbündig angezeigt. Weitere Editierungsregeln zur Formatierung der Konfigurationsdaten KD können auf diese Weise ebenfalls leicht definiert werden, z.B. Größe der Anzeige eines Datenfeldes, Anzahl von Datenfeldern in einer Zeile einer Tabelle etc..

Sollen über eine Formatierung definierende Editierungsregeln hinausgehende Editierungsregeln definiert werden, wird für die Definition der Editierungsregeln vorteilhaft eine sogenannte Interpretersprache eingesetzt, deren Anweisungen der Editor EM "interpretieren", also auswerten und in maschinenlesbare Befehle umsetzen kann. Diese Befehle kann dann das Steuermittel CPU in ähnlicher Weise ausführen wie die Befehlssequenzen des Editors EM. Mit Hilfe einer Interpretersprache können in den Editierungsregelsätzen ER1 und ER2 auch Funktionsblöcke mit umfangreicheren Befehlssequenzen, sogenannte "Makros", definiert werden, deren Anweisungen der Editor EM beim Editieren der Konfigurationsdaten KD das Steuermittel CPU ausführen lassen kann. Wenn ein Eintrag in den Konfigurationsdaten KD an verschiedenen Stellen gleichlautend auftritt, z.B. in verschiedenen Tabellen, darf dieser Eintrag bei einer Modifikation nicht nur an einer dieser Stellen geändert werden, sondern muß an allen Stellen gleichlautend modifiziert werden. Der Editor EM kann entweder selbst alle Stellen mit einem gleichlautenden Eintrag versehen oder ein dafür in den Editierungsregeln des Editierungsregelsatz ER2 vorgesehenes Makro damit beauftragen.

Vorteilhafterweise wird für die Editierungsregeln eine universell für verschiedene Zwecke geeignete Interpretersprache verwendet. Ein Beispiel für eine universelle Interpretersprache ist die Sprache PERL (Practical Extraction and Report Language), die im Zusammenhang mit dem Betriebssystem UNIX gebräuchlich ist. Wenn die Editierungsregeln in PERL verfaßt sind, muß der Editor EM die Editierungsregeln nicht unbedingt selbst interpretieren, sondern kann ein "PERL-Interpreter" genanntes Programmodul mit der Interpretation der Editierungsregeln beauftragen. Ein PERL-Interpreter gehört üblicherweise zum Lieferumfang eines UNIX Betriebsystemes. Die von dem PERL-Interpreter aus den Editierungsregeln erzeugten maschinenlesbaren Befehle werden von dem Editor EM in dessen eigene Befehlssequenzen eingebunden, z.B. in Form von Programmverzweigungen.

Besonders einfach ist dieser Prozeß des Einbindens von Editierungsregeln in der Editor EM dann, wenn sowohl der Editor EM als auch die einzubindenden Editierungsregeln in derselben Interpretersprache verfaßt sind. Dann kann in dem Editor EM ein allgemeiner Aufruf enthalten sein, der auf eine Editierungsregel verweist, die einen in dem Aufruf angegebenen Namen trägt. Der Aufruf verweist jedoch, je nachdem welcher der Editierungsregelsätze ER1 oder ER2 zu der Validierung verwendet werden muß, entweder auf eine Editierungsregel in dem Editierungsregelsatz ER1 oder auf eine Editierungsregel in dem Editierungsregelsatz ER2. Beide Editierungsregeln tragen zwar den gleichen Namen, können aber unterschiedliche Prüfvorschriften enthalten. Für eine korrekte Verzweigung der Befehlssequenzen des Editors EM in die durch Interpretieren der Editierungsregeln erzeugten Befehlssequenzen sorgt in diesem Fall das Interpreter-Programmodul.

Die Editierungsregeln können in den Editierungsregelsätze ER1 und ER2 auch bereits in einer von einem Prozessor ausführbaren Form, als sogenannte Funktionen, auch Bibliotheksfunktionen genannt, enthalten sein. Der Editor EM kann die Befehlssequenzen solcher Funktionen ohne vorherige Interpretation direkt in seine eigenen Befehlssequenzen einbinden. Ein solcher Vorgang wird auch als "dynamisches Linken" von Funktionen bezeichnet. In einer weiteren Variante der Erfindung können solche Funktionen auch erst zur Laufzeit des Editors EM erzeugt werden, indem der Editor EM einen zum Editieren der Konfigurationsdaten KD zu verwendenden Editierungsregelsatz zunächst in von einem Prozessor ausführbare Befehlssequenzen übersetzt oder durch ein Übersetzer-Programmodul übersetzen läßt und die so erzeugten Editierungsregel-Befehlssequenzen in seine eigenen Befehlssequenzen einbindet.

Die Ausführungen in den obigen Abschnitten zu den Editierungsregeln gelten analog auch für die Validierungsregeln des Validierungsregelsatzes VR. Der Validierungsregelsatz VR kann z.B. ebenfalls in einer Interpretersprache verfaßt sein, Funktionsblöcke enthalten, sowohl in Form von Makros als auch in Form ausführbarer Programm-Funktionen.

Es ist zusätzlich oder alternativ zu der Ermittlung eines Editierungsregelsatzes anhand von Steuerdaten möglich, daß der Editor EM anhand der Konfigurationsdaten KD ermittelt, welcher der Editierungsregelsätze ER1 oder ER2 zur Prüfung der Konfigurationsdaten KD benötigt wird. Dazu sucht der Editor EM in den Konfigurationsdaten KD nach einem Merkmal oder einem Identifizierer, der die Konfigurationsdaten KD eindeutig kennzeichnet. Ein solcher Identifizierer ist in Form eines Identifizierers ID2 in den Konfigurationsdaten KD enthalten. Der Identifizierer ID2 kann die Konfigurationsdaten KD z.B. als zu einem bestimmten Zielsystem zugehörig ausweisen und ein Textelement mit dem Inhalt sein: "Vermittlungsstelle A mit Steuersoftware Version 1.3". Anhand von beispielsweise in einer Zuordnungstabelle enthaltenen Zuordnungen von jeweils einem solchen Identifizierer zu einem der Editierungsregelsätze kann dann der Editor EM feststellen, welcher Editierungsregelsatz zum Editieren der Konfigurationsdaten KD zu verwenden ist. Es ist auch möglich, daß der Editor EM den zum Editieren der Konfigurationsdaten KD erforderlichen Editierungsregelsatz ER1 oder ER2 anhand eines Identifizierers ermittelt, der gleich lauten muß wie derjenige, der in den Konfigurationsdaten KD enthalten ist. Der Identifizierer ID2 der Konfigurationsdaten KD ist in dem Beispiel aus Figur 1 auch in dem Editierungsregelsatz ER2 angegeben; der Editierungsregelsatz ER1 dagegen weist einen Identifizierer ID1 auf.

Wenn kein Identifizierer in den Konfigurationsdaten KD enthalten ist, z.B. weil ein solcher Identifizierer das Zielsystem bei der Verarbeitung der Konfigurationsdaten KD stören würde, kann der Editor EM auch anhand der Struktur und der Art der Konfigurationsdaten KD ermitteln, welcher Editierungsregelsatz zur Prüfung verwendet muß. Wenn - in einem sehr einfachen Beispiel - die Konfigurationsdaten KD nur Datensätze enthalten, die jeweils mit einer Zahlenkette beginnen, kann der Editor EM z.B. daraus ableiten, daß die Konfigurationsdaten KD nach dem Editierungsregelsatz ER1 zu editieren sind. Wenn die Konfigurationsdaten KD jedoch nur Datensätze enthalten, die jeweils mit einer Buchstabenkette beginnen, kann der Editor EM daran erkennen, daß die Konfigurationsdaten KD nach dem Editierungsregelsatz ER2 zu editieren sind.

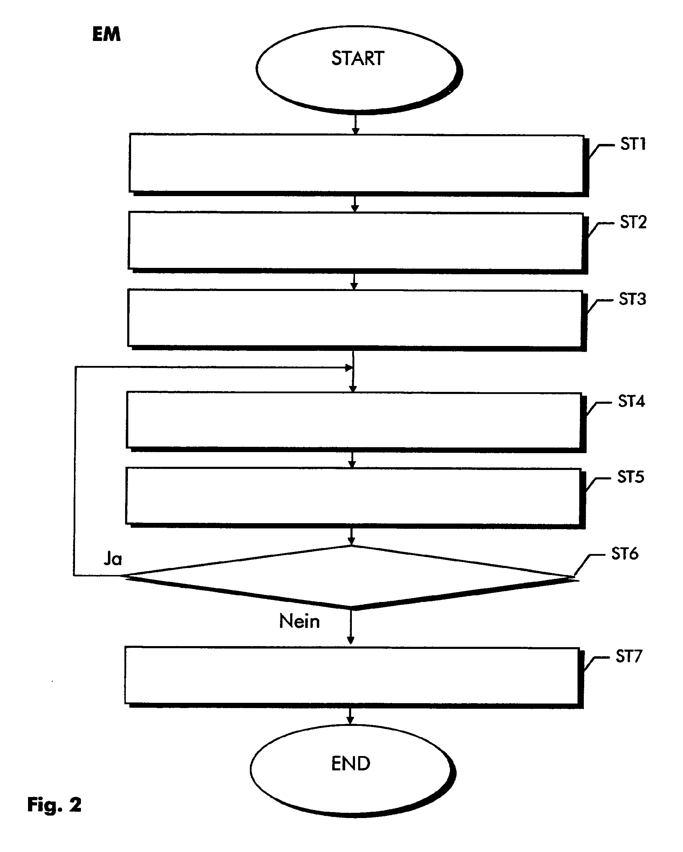

In Figur 2 ist der Editor EM in wesentlichen Funktionsschritten dargestellt. Der Editor EM besteht, wie schon erwähnt, aus in einem Speicher gespeicherten und von einem Steuermittel, z.B. von einem Prozessor, lesbaren und unmittelbar ausführbaren oder mit Hilfe eines Interpreter-Programmodules indirekt auswertbaren Befehlssequenzen. Der Editor EM kann z.B. in der Programmiersprache "JAVA" verfaßt sein, die ursprünglich für Internet-Anwendungen entwickelt worden ist und für deren Interpretation inzwischen nahezu jedes Betriebssystem ein geeignetes Interpreter-Programmodul aufweist. Im Interesse einer leicht verständlichen Darstellung ist der Editor EM in Figur 2 in Form eines Ablaufdiagrammes dargestellt, in dessen Ablauf einzelne Schritte ausgeführt werden. Die einzelnen Schritte stehen jeweils für einen einzelnen Befehl oder eine Folge von Befehlen, die jeweils eine funktionale Einheit, eine sogenannte Funktion, bilden. Die Anzahl der Schritte in Figur 2 sowie deren Ablauf ist als beispielhaft für eine praxisgerechte Lösung anzusehen. Es ist jedoch auch möglich, daß die Schritte in einer anderen als in Figur 2 dargestellten Reihenfolge durchlaufen werden. Der Editor EM ist z.B. von dem Rechner SER aus Figur 3 ausführbar.

Ausgehend von einem Startfeld START ermittelt der Editor EM in einem Schritt ST1, z.B. anhand der aus Figur 1 bekannten Steuerdaten VCONF, nach welchem Editierungsregelsatz er Konfigurationsdaten editieren soll. Die Anweisungen des Schrittes ST1, z.B. das Einlesen der Steuerdaten VCONF und deren Auswertung sind in einer Ermittlungsfunktionseinheit, z.B. in einem Unterprogramm, zusammengefaßt. In einem Schritt ST2 liest der Editor EM den ermittelten Editierungsregelsatz ein und wertet anschließend erste darin enthaltene Editierungsregeln in einem Schritt ST3 aus und gestaltet anhand dieser Editierungsregeln z.B. eine Anzeige auf der Anzeigevorrichtung DIS. In einem Schritt ST4 erfaßt der Editor EM Konfigurationsdaten, die z.B. als Bedienereingaben an dem Tastenfeld KEY eingegeben werden. Es ist jedoch auch möglich, daß der Editor EM in dem Schritt ST4 zunächst zu modifizierende Konfigurationsdaten einliest, die bereits von einem Telekommunikationssystem verwendet werden. Diese Konfigurationsdaten zeigt der Editor EM in einem Schritt ST5 nach den Vorgaben der Editierungsregeln an. In dem Schritt ST5 kann der Editor EM auch eine Bedienereingabe zu den Konfigurationsdaten nach einer in Schritt ST2 eingelesenen Editierungsregel überprüfen. In einem Schritt ST6 wird überprüft, ob der Editor EM nach Erfüllung des Schrittes ST5 die Konfigurationsdaten ausgeben oder weitere Bedienereingaben erfassen soll. Sollen weitere Bedienereingaben gemacht werde, verzweigt der Editor EM wieder zu dem Schritt ST4. Ansonsten gibt der Editor EM in einem Schritt ST7 Konfigurationsdaten aus, speichert diese also z.B. in dem Speicher MEM ab oder sendet die Konfigurationsdaten über die Schnittstellenvorrichtung IF an ein mit den Konfigurationsdaten zu konfigurierendes Telekommunikationssystem, wenn ihm eine Anweisung dazu gegeben wird. Anschließend endet der Editor EM in einem Schritt END.

## Patentansprüche

1. Verfahren zum Editieren von Konfigurationsdaten (KD) als Betriebsparameter von Telekommunikationssystemen anhand von Editierungsregeln durch einen Editor (EM) und zum Ermitteln eines Editierungsregelsatz (ER2) mit mindestens einer Editierungsregel nach der die Konfigurationsdaten (KD) durch den Editor (EM) zu editieren sind, **dadurch gekennzeichnet, dass** bei dem Verfahren die folgenden Schritte durchgeführt werden:
- Ermitteln des besagten Editierungsregelsatzes (ER2) mittels für den Editor (EM) bestimmter Steuerdaten (VCONF) oder mittels der Konfigurationsdaten (KD),
- Einlesen des Editierungsregelsatzes,
- Auswerten des Editierungsregelsatzes,
- Einlesen von bereits definierten Werten für die Konfigurationsdaten,
- Editieren der Konfigurationsdaten gemäß den Vorschriften des Editierungsregelsatzes und
- Ausgeben der Konfigurationsdaten.

2. Verfahren nach Anspruch 1, **dadurch gekennzeichnet, daß** der Editor (EM) einen Validierungsregelsatz ermittelt, der mindestens eine Validierungsregel enthält und mit dem die Konfigurationsdaten (KD) validierbar sind, daß der Editor den Validierungsregelsatz auswertet, und daß der Editor die Konfigurationsdaten gemäß Vorschriften des Validierungsregelsatzes editiert.

3. Verfahren nach Anspruch 1, **dadurch gekennzeichnet, daß** bei dem Auswerten des Editierungsregelsatzes (ER2) Funktionsblöcke ermittelt und eingelesen werden, mit denen die Konfigurationsdaten (KD) entsprechend den in dem Editierungsregelsatz enthaltenen Editierungsregeln editiert werden können, und daß zu dem Editieren der Konfigurationsdaten die Funktionsblöcke eingesetzt werden.

4. Verfahren nach Anspruch 1, **dadurch gekennzeichnet, daß** der Editierungsregelsatz (ER) mit Hilfe eines in den Konfigurationsdaten (KD) enthaltenen Kennzeichners (ID1) ermittelt wird.

5. Editor (EM) zum Editieren von Konfigurationsdaten (KD) als Betriebsparameter von Telekommunikationssystemen anhand von Editierungsregeln und zum Ermitteln eines Editierungsregelsatzes (ER2) mit mindestens einer Editierungsregel, nach der die Konfigurationsdaten (KD) durch den Editor (EM) zu editieren sind **dadurch gekennzeichnet, daß** der Editor eine Ermittlungsfunktionseinheit aufweist, die so ausgestaltet ist, daß der Editor besagten Editierungsregelsatz (ER2) mittels für den Editor (EM) bestimmter Steuerdaten (VCONF) oder mittels der Konfigurationsdaten (KD) ermitteln kann, daß der Editor eine Einlesefunktionseinheit aufweist, die so ausgestaltet ist, daß der Editor den Editierungsregelsatz einlesen kann, daß der Editor eine Auswertefunktionseinheit aufweist, die so ausgestaltet ist, daß der Editor den Editierungsregelsatz auswerten kann, daß der Editor eine Einlesefunktionseinheit aufweist, die so ausgestaltet ist, daß der Editor bereits definierte Werte für die Konfigurationsdaten einlesen kann, daß der Editor eine Editierfunktionseinheit aufweist, die so ausgestaltet ist, daß der Editor die Konfigurationsdaten gemäß den Vorschriften des Editierungsregelsatzes editieren kann, und daß der Editor eine Ausgabefunktionseinheit aufweist, die so ausgestaltet ist, daß der Editor die Konfigurationsdaten ausgeben kann.

6. Rechner (SER) zum Editieren von Konfigurationsdaten (KD) als Betriebsparameter von Telekommunikationssystemen anhand von Editierungsregeln und zum Ermitteln eines Editierungsregelsotzes (ER2) mit mindestens einer Editierungsregel, nach der die Konfigurationsdaten (KD) durch den Editor (EM) zu editieren sind **dadurch gekennzeichnet, daß** der Rechner Ermittlungsmittel aufweist, die so ausgestaltet sind, daß der Rechner besagten Editierungsregelsatz (ER2) mittels für den Editor (EM) bestimmter Steuerdaten (VCONF) oder mittels der Konfigurationsdaten (KD) ermitteln kann, daß der Rechner Einlesemittel aufweist, die so ausgestaltet sind, daß der Rechner den Editierungsregelsatz einlesen kann, daß der Rechner Auswertemittel aufweist, die so ausgestaltet sind, daß der Rechner den Editierungsregelsatz auswerten kann, daß der Rechner Einlesemittel aufweist, die so ausgestaltet sind, daß der Rechner bereits definierte Werte für die Konfigurationsdaten einlesen kann, daß der Rechner Editiermittel (DIS, KEY) aufweist, die so ausgestaltet sind, daß der Rechner die Konfigurationsdaten gemäß den Vorschriften des Editierungsregelsatzes editieren kann, und daß der Rechner Ausgabemittel (IF) aufweist, die so ausgestaltet sind, daß der Rechner die Konfigurationsdaten ausgeben kann.

7. System zum Editieren von Konfigurationsdaten **dadurch gekennzeichnet, daß** es Mittel zur Durchführung des Verfahrens nach Anspruch 1 aufweist.

8. Speichermittel, **dadurch gekennzeichnet, daß** darauf ein Editor (EM) nach Anspruch 5 gespeichert ist.

## Claims

1. Method for editing of configuration data (KD) as operational parameters of telecommunications systems by means of editing rules by an editor (EM), and for determination of an editing rule set (ER2) with at least one editing rule according to which the configuration data (KD) should be edited by the editor (EM), **characterized in that** the following steps are executed in the method:
o Determination of said editing rule set (ER2) by means of control data (VCONF) intended for the editor (EM), or by means of the configuration data (KD),
o Reading in of the editing rule set,
o Evaluation of the editing rule set,
o Reading in of previously defined values for the configuration data,
o Editing of the configuration data in accordance with the rules of the editing rule set and
o Output of the configuration data.

2. Method according to Claim 1, **characterized in that** the editor (EM) determines a validation rule set, which contains at least one validation rule and with which the configuration data (KD) can be validated, that the editor evaluates the validation rule set, and that the editor edits the configuration data in accordance with rules of the validation rule set.

3. Method according to Claim 1, **characterized in that** in the evaluation of the editing rule set (ER2), function blocks are determined and read in, with which the configuration data (KD) can be edited according to the editing rules contained in the editing rule set, and that the function blocks are used for the editing of the configuration data.

4. Method according to Claim 1, **characterized in that** the editing rule set (ER) is determined with the help of an identifier (ID1) contained in the configuration data (KD).

5. Editor (EM) for editing of configuration data (KD) as operational parameters of telecommunications systems by means of editing rules, and for determination of an editing rule set (ER2) with at least one editing rule according to which the configuration data (KD) should be edited by the editor (EM), **characterized in that** the editor has a determination function unit, which is developed such that the editor can determine said editing rule set (ER2) by means of control data (VCONF) intended for the editor (EM) or by means of the configuration data (KD), that the editor has a read-in function unit which is developed such that the editor can read in the editing rule set, that the editor has an evaluation function unit which is developed such that the editor can evaluate the editing rule set, that the editor has a read-in function unit which is developed such that the editor can read in previously defined values for the configuration data, that the editor has an editing function unit which is developed such that the editor can edit the configuration data in accordance with the rules of the editing rule set, and that the editor has an output function unit which is developed such that the editor can output the configuration data.

6. Computer (SER) for editing of configuration data (KD) as operational parameters of telecommunications systems by means of editing rules, and for determination of an editing rule set (ER2) with at least one editing rule according to which the configuration data (KD) should be edited by the editor (EM), **characterized in that** the computer has determining means, which are developed such that the computer can determine said editing rule set (ER2) by means of control data (VCONF) intended for the editor (EM) or by means of the configuration data (KD), that the computer has reading-in means which are developed such that the computer can read in the editing rule set, that the computer has evaluation means which are developed such that the computer can evaluate the editing rule set, that the computer has reading-in means which are developed such that the computer can read in previously defined values for the configuration data, that the computer has editing means (DIS, KEY) which are developed such that the computer can edit the configuration data in accordance with the rules of the editing rule set, and that the computer has output means (IF) which are developed such that the computer can output the configuration data.

7. System for editing of configuration data, **characterized in that** it has means for executing the method according to Claim 1.

8. Storage means, **characterized in that** an editor (EM) according to Claim 5 is stored therein.

## Revendications

1. Procédé permettant l'édition de données de configuration (KD) en tant que paramètres d'exploitation de systèmes de télécommunication au moyen de règles d'édition par l'intermédiaire d'un éditeur (EM) et permettant la détermination d'un ensemble de règles d'édition (FR7) comportant au moins une règle d'édition selon laquelle les données de configuration (KD) doivent être éditées par l'intermédiaire de l'éditeur (EM), **caractérisé en ce que** avec le procédé les étapes suivantes sont exécutées :
- détermination de l'ensemble de règles d'édition susmentionnées (ER2) au moyen de certaines données de commande (VCONF) ou des données de configuration (KD) pour l'éditeur (EM),
- lecture de l'ensemble de règles d'édition,
- évaluation de l'ensemble de règles d'édition,
- lecture des valeurs déjà définies pour les données de configuration,
- édition des données de configuration conformément aux prescriptions de l'ensemble de règles d'édition et
- sortie des données de configuration.

2. Procédé selon la revendication 1, **caractérisé en ce que** l'éditeur (EM) détermine un ensemble de règles de validation qui contient au moins une règle de validation et avec lequel les données de configuration (KD) peuvent être validées, l'éditeur évalue l'ensemble de règles de validation, et édite les données de configuration conformément aux prescriptions de l'ensemble de règles de validation.

3. Procédé selon la revendication 1, **caractérisé en ce que**, lors de l'évaluation de l'ensemble de règles d'édition (ER2), des blocs de fonction, avec lesquels les données de configuration (KD) peuvent être éditées conformément aux règles d'édition contenues dans l'ensemble de règles d'édition, sont déterminés et lus, et les blocs de fonction sont utilisés pour l'édition des données de configuration.

4. Procédé selon la revendication 1, **caractérisé en ce que** l'ensemble de règles d'édition (ER) est déterminé à l'aide d'un identificateur (ID1) contenu dans les données de configuration (KD).

5. Editeur (EM) permettant l'édition de données de configuration (KD) en tant que paramètres d'exploitation de systèmes de télécommunication au moyen de règles d'édition et la détermination d'un ensemble de règles d'édition (ER2) comportant au moins une règle d'édition, selon laquelle les données de configuration (KD) doivent être éditées par l'intermédiaire de l'éditeur (EM), **caractérisé en ce que** l'éditeur présente un ensemble fonctionnel de détermination qui est configuré, de sorte que l'éditeur puisse déterminer ledit ensemble de règles d'édition (ER2) au moyen de certaines données de commande (VCONF) ou des données de configuration (KD) pour l'éditeur (EM), l'éditeur présente un ensemble fonctionnel de lecture qui est configuré, de sorte que l'éditeur puisse lire l'ensemble de règles d'édition, l'éditeur présente un ensemble fonctionnel d'évaluation, qui est configuré, de sorte que l'éditeur puisse évaluer l'ensemble de règles d'édition, l'éditeur présente un ensemble fonctionnel de lecture qui est configuré, de sorte que l'éditeur puisse lire les valeurs déjà définies pour les données de configuration, l'éditeur présente un ensemble fonctionnel d'édition qui est configuré, de sorte que l'éditeur puisse éditer les données de configuration conformément aux prescriptions de l'ensemble de règles d'édition, l'éditeur présente un ensemble fonctionnel de sortie qui est configuré, de sorte que l'éditeur puisse sortir les données de configuration.

6. Ordinateur (SER) permettant l'édition de données de configuration (KD) en tant que paramètres d'exploitation de systèmes de télécommunication au moyen de règles d'édition et la détermination d'un ensemble de règles d'édition (ER2) comportant au moins une règle d'édition, selon laquelle les données de configuration (KD) doivent être éditées par l'intermédiaire de l'éditeur (EM), **caractérisé en ce que** l'ordinateur présente des moyens de détermination qui sont configurés, de sorte que l'ordinateur puisse déterminer ledit ensemble de règles d'édition (ER2) au moyen de certaines données de commande (VCONF) ou des données de configuration (KD) pour l'éditeur (EM), l'ordinateur présente des moyens de lecture qui sont configurés, de sorte que l'ordinateur puisse lire l'ensemble de règles d'édition, l'ordinateur présente des moyens d'évaluation qui sont configurés, de sorte que l'ordinateur puisse évaluer l'ensemble de règles d'édition, l'ordinateur présente des moyens de lecture qui sont configurés, de sorte que l'ordinateur puisse lire les valeurs déjà définies pour les données de configuration, l'ordinateur présente des moyens d'édition (DIS, KEY) qui sont configurés de sorte que l'ordinateur puisse éditer les données de configuration conformément aux prescriptions de l'ensemble de règles d'édition, l'ordinateur présente des moyens de sortie (IF) qui sont configurés, de sorte que l'ordinateur puisse sortir les données de configuration.

7. Système permettant l'édition de données de configuration, **caractérisé en ce qu'**il présente des moyens permettant l'exécution du procédé selon la revendication 1.

8. Moyen de mémorisation, **caractérisé en ce qu'**un éditeur (EM) est mis en mémoire dans celui-ci selon la revendication 5.
